# EUROPEAN PATENT APPLICATION

(11) **EP 3 279 807 A1**
(43) Date of publication of application: **07.02.2018**
(21) Application number: 16771249.6
(22) Date of filing: 15.03.2016
(51) Int. Cl.: G06F 17/30

(54) **DATA PROCESSING METHOD AND APPARATUS**

(30) Priority: 01.04.2015 CN 201510151236
(71) Applicant: Alibaba Group Holding Limited, Grand Cayman (KY)
(72) Inventor: ZHANG, Junjie, Hangzhou 310099 (CN); ZHANG, Yu, Hangzhou 310099 (CN); XU, Di, Hangzhou 310099 (CN)
(74) Representative: Conroy, John
(86) International application number: PCT/CN2016/076412
(87) International publication number: WO 2016/155494

(57) **Abstract**

The present application provides a data processing method and apparatus. The method comprises: sending, by a client terminal, to a server terminal a feature identifier of a user in a current data processing process; receiving processing capacity information about the user for at least one data processing mode returned by the server terminal according to the feature identifier of the user; determining, by the client terminal, candidate data processing modes to be displayed to the user and a display mode according to the processing capacity information about the user for at least one data processing mode; and displaying, by the client terminal, the candidate data processing modes to the user according to the display mode for the user to select a target data processing mode for the current data processing process from the candidate data processing modes. The present application can improve the efficiency of selecting a data processing mode by a user, and improve the execution efficiency of data processing.

## Description

### [Technical field]

The present application relates to the technical field of Internet, and in particular to a data processing method and apparatus.

### [Background art]

With the development of Internet technologies, there is an increasing number of Internet-based applications, and the applications are becoming more and more complicated. The applications may generally involve data processing, and the data processing may use a variety of data processing modes, while different data processing modes generate different effects.

In the prior art, information about these data processing modes (e.g., information about an icon or entry, etc.) are generally displayed to a user in a manner of random sorting, for the user to select a data processing mode to be used therefrom. In practical applications, due to the limitation of screen size, generally the screen may only display information about some data processing modes, and information about the remaining data processing modes may be hidden; in this way, when a user selects a data processing mode, the information about the data processing modes displayed on the screen needs to be viewed first, and when information about the required data processing mode is not displayed on the screen, the information about the hidden data processing modes may further be expanded, and the required data processing mode will be selected based on the expanded information about the data processing modes, which may take a relatively long time and affect the execution efficiency of data processing.

### [Summary of the invention]

A plurality of aspects of the present application provide a data processing method and apparatus, for improving the efficiency of selecting a data processing mode by a user, and improving the execution efficiency of data processing.

In one aspect of the present application, a data processing method is provided, comprising:
sending, by a client terminal, to a server terminal a feature identifier of a user in a current data processing process;
receiving, by the client terminal, processing capacity information about the user for at least one data processing mode returned by the server terminal according to the feature identifier of the user;
determining, by the client terminal, candidate data processing modes to be displayed to the user and a display mode according to the processing capacity information about the user for at least one data processing mode; and
displaying, by the client terminal, the candidate data processing modes to the user according to the display mode for the user to select a target data processing mode for the current data processing process from the candidate data processing modes.

In another aspect of the present application, a data processing method is provided, comprising:
receiving, by a server terminal, a feature identifier of a user in a current data processing process sent by a client terminal;
acquiring, by the server terminal, processing capacity information about the user for at least one data processing mode according to the feature identifier of the user; and
sending, by the server terminal, to the client terminal the processing capacity information about the user for the at least one data processing mode for the client terminal to determine candidate data processing modes to be displayed to the user and a display mode.

In yet one aspect of the present application, a data processing apparatus is provided, implemented at a client terminal, the apparatus comprising:
a sending module, configured to send to a server terminal a feature identifier of a user in a current data processing process;
a receiving module, configured to receive processing capacity information about the user for at least one data processing mode returned by the server terminal according to the feature identifier of the user;
a determination module, configured to determine candidate data processing modes to be displayed to the user and a display mode according to the processing capacity information about the user for at least one data processing mode; and
a display module, configured to display the candidate data processing modes to the user according to the display mode for the user to select a target data processing mode for the current data processing process from the candidate data processing modes.

In yet one aspect of the present application, a data processing apparatus is provided, implemented at a server terminal, the apparatus comprising:
a receiving module, configured to receive a feature identifier of a user in a current data processing process sent by a client terminal;
an acquisition module, configured to acquire processing capacity information about the user for at least one data processing mode according to the feature identifier of the user; and
a sending module, configured to send to the client terminal the processing capacity information about the user for the at least one data processing mode for the client terminal to determine candidate data processing modes to be displayed to the user and a display mode.

In the present application, a client terminal sends to a server terminal a feature identifier of a user in a current data processing process, receives processing capacity information about the user for at least one data processing mode returned by the server terminal according to the feature identifier of the user, determines candidate data processing modes to be displayed to the user and a display mode according to the processing capacity information about the user for at least one data processing mode, and displays the candidate data processing modes to the user according to the display mode for the user to select a target data processing mode for the current data processing process therefrom. Since data processing modes are displayed to a user according to processing capacity information about the user for the data processing modes in the present application, the probability that the user successfully selects a required data processing mode for a current data processing process from the displayed data processing modes is relatively high, which may simplify the operation that the user selects a data processing mode, and is beneficial to improving the execution efficiency of data processing.

### [Brief description of the accompanying drawings]

In order to describe the technical solutions in the embodiments of the present application more clearly, the accompanying drawings required for describing the embodiments or the prior art will be briefly introduced hereinbelow. Apparently, the accompanying drawings in the following description show some embodiments of the present application, and those of ordinary skills in the art may further derive other drawings from these accompanying drawings without any creative effort.
Fig. 1 is a schematic flow chart of a data processing method provided by an embodiment of the present application;
Fig. 2 is a schematic flow chart of a data processing method provided by another embodiment of the present application;
Fig. 3 is a schematic structural diagram of a data processing apparatus provided by an embodiment of the present application; and
Fig. 4 is a schematic structural diagram of a data processing apparatus provided by another embodiment of the present application.

### [Detailed description]

In order to make the objectives, technical solutions, and advantages of the embodiments of the present application clearer, the technical solutions in the embodiments of the present application will be clearly and completely described in conjunction with the accompanying drawings in the embodiments of the present application. Apparently, the embodiments to be described are merely some, rather than all, of the embodiments of the present application. Based on the embodiments of the present application, all other embodiments obtained by those of ordinary skills in the art without any creative effort all fall within the scope of protection of the present application.

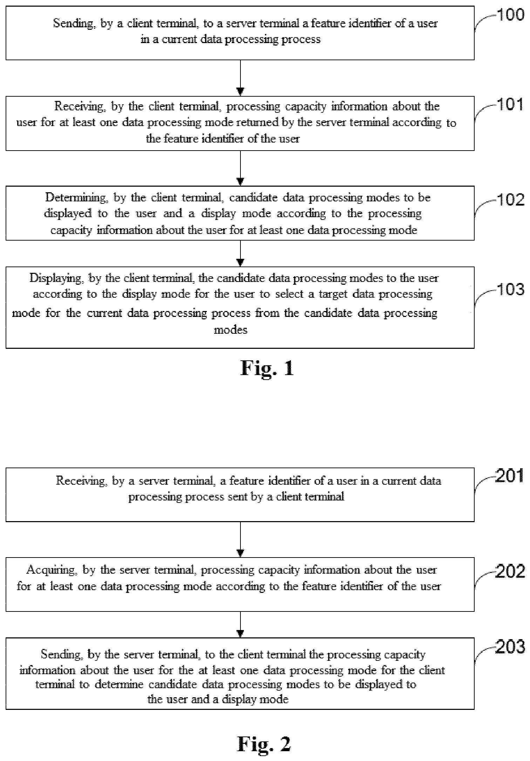

Fig. 1 is a schematic flow chart of a data processing method provided by an embodiment of the present application. As shown in Fig. 1, the method comprises:
100, sending, by a client terminal, to a server terminal a feature identifier of a user in a current data processing process;
101, receiving, by the client terminal, processing capacity information about the user for at least one data processing mode returned by the server terminal according to the feature identifier of the user;
102, determining, by the client terminal, candidate data processing modes to be displayed to the user and a display mode according to the processing capacity information about the user for at least one data processing mode; and
103, displaying, by the client terminal, the candidate data processing modes to the user according to the display mode for the user to select a target data processing mode for the current data processing process from the candidate data processing modes.

This embodiment provides a data processing method, which can be implemented at a client terminal. The client terminal refers to a party which executes a particular operation so as to implement a certain service, and the client terminal is not limited in this embodiment. For example, the client terminal may specifically be a client terminal which implements various services such as a payment service, a download service, a search service, etc.

It is worth noting that all the client terminals in the present application need to rely on data processing modes provided by the server terminal to implement corresponding services. Depending on different service types implemented by the client terminal, the required data processing modes may also be different. For example, with regard to a payment type service, the required data processing mode may be one with a payment function. For instance, it may be various payment modes such as a credit card, a bank card, Tenpay™, Alipay™, etc.

Specifically, when the client terminal needs to use a data processing mode provided by the server terminal to execute a corresponding service, the feature identifier of the user in the current data processing process may be acquired, and processing capacity information about the user for at least one data processing mode may be acquired according to the feature identifier of the user in the current data processing process; candidate data processing modes to be displayed to the user and a display mode are determined according to the processing capacity information about the user for at least one data processing mode; and the candidate data processing modes are displayed to the user according to the display mode for the user to select a target data processing mode for the current data processing process from the candidate data processing modes.

The at least one data processing mode described above may not only comprise: a data processing mode which has been used by the user for data processing via the client terminal of this embodiment, but also comprise data processing modes which have been used by the user for data processing via other client terminals different from the client terminal of this embodiment.

In the process of conducting a service, generally the user may be requested to provide information related to the user, such as mobile phone number, mailbox address, ID number, name, International Mobile Equipment Identity (IMEI), International Mobile Subscriber Identification Number (IMSI), Internet Protocol (IP) address, Media Access Control (MAC) address, etc. The feature identifier described above may be, but is not limited to, one or more pieces of the following information: mobile phone number, mailbox address, ID number, name, IMEI, IMSI, IP address, MAC address, etc.

The processing capacity information about the user for a data processing mode described above may embody the possibility that the user uses the data processing mode in the current data processing process to some extent. In a specific implementation, a use score of the user for a data processing mode may be used to represent the processing capacity information about the user for the data processing mode, but it is not limited to this. A higher use score of the user for a data processing mode means a higher possibility that the user selects to use the data processing mode in the current data processing process.

In this embodiment, in order to facilitate description, the data processing modes needing to be displayed to the user are referred to as candidate data processing modes, and the data processing mode finally selected by the user for the current data processing process is referred to as a target data processing mode. The target data processing mode is one or more of the candidate data processing modes; and the candidate data processing modes are one or more of the at least one data processing mode described above.

For example, when it is determined according to the processing capacity information about the user for the at least one data processing mode that the user may possibly use each data processing mode in the at least one data processing mode, each data processing mode in the at least one data processing mode is taken as one candidate data processing mode; and when it is determined according to the processing capacity information about the user for the at least one data processing mode that the user may possibly use part of data processing modes in the at least one data processing mode, that part of data processing modes are taken as candidate data processing modes.

In this embodiment, the display mode described above mainly comprises an arrangement order of the candidate data processing modes, and whether to make a distinct mark or text prompt, etc. for part of candidate data processing modes. The display mode of the candidate data processing modes embodies the possibility that the user uses the candidate data processing modes in the current data processing process to some extent. For example, the arrangement order when the candidate data processing modes are displayed may be a descending order of possibilities that the user uses the candidate data processing modes, and with regard to a candidate data processing mode of which the possibility of being used by the user is greater than a specified threshold, a distinct mark and/or text prompt, etc. may be made; and with regard to a candidate data processing mode of which the possibility of being used by the user is smaller than or equal to a specified threshold, it may be hidden. If the client terminal receives a relatively high processing capacity of the user for a certain data processing mode, this data processing mode may be determined as a uniquely displayed data processing mode, and the data processing mode may be directly displayed to the user without being selected by the user. Certainly, when the data processing mode is displayed, a switch button for the data processing modes may also be provided for the user to select other data processing modes.

It is worth noting that the displaying candidate data processing modes to the user in this embodiment mainly refers to displaying information about the candidate processing modes to the user, such as identifiers (ID), names, link addresses, etc. of the candidate data processing modes.

It can be seen that determining, by the client terminal, candidate data processing modes to be displayed to the user according to processing capacity information about the user for at least one data processing mode may select a data processing mode which may possibly be used by the user in the current data processing process from the at least one data processing mode, which is beneficial to screening out those data processing modes with lower possibilities, is beneficial to decreasing the number of pieces of information about the data processing modes to be recommended or displayed to the user, and is beneficial to improving the efficiency that the user selects a target data processing mode therefrom; in addition, determining a display mode for displaying the candidate data processing modes according to the processing capacity information about the user for the at least one data processing mode and displaying the candidate data processing modes to the user according to the display mode may preferentially display information about a data processing mode of which the possibility of being used by the user is higher, which is beneficial to further improving the efficiency that the user selects a target data processing mode from the candidate data processing modes, thereby improving the execution efficiency of a service.

In one optional embodiment, each data processing mode is managed by a corresponding server terminal, then the process of sending, by a client terminal, to a server terminal a feature identifier of a user in a current data processing process comprises:
using the feature identifier of the user in the current data processing process, such as mobile phone number, mailbox address, ID number, name, IMEI, IMSI, IP address, MAC address, etc. The client terminal sends the collected feature identifier of the user to a server terminal of each data processing mode of at least one data processing mode for the server terminal of each data processing mode to acquire and return processing capacity information about the user for the data processing mode according to the feature identifier of the user. Correspondingly, receiving, by the client terminal, processing capacity information about the user for at least one data processing mode returned by the server terminal according to the feature identifier of the user comprises: receiving, by the client terminal, processing capacity information about the user for each data processing mode returned by the server terminal of each data processing mode.

In the embodiment, the server terminal of each data processing mode generates in advance and stores the processing capacity information about the user for the data processing mode provided by the server terminal.

For example, the server terminal may collect behavioral data of the user using the data processing mode, and thus form a mapping relationship between an identity identifier of the user at the server terminal and the processing capacity information about the user for the data processing mode according to the collected behavioral data, and store the mapping relationship in a database.

Furthermore, the server terminal may also send the identity identifier of the user at the server terminal to the client terminal. After the user selects a target data processing mode for the current data processing process from candidate data processing modes according to the candidate data processing modes displayed in the display mode described above, the client terminal may send to the server terminal of each data processing mode the identity identifier of the user at the server terminal sent by the server terminal of each data processing mode, an identifier of the target data processing mode and result information about using the target data processing mode in the current data processing process, etc., for the server terminal of each data processing mode to update the processing capacity information about the user for each data processing mode. The identifier of the target data processing mode may be any information that can identify the target data processing mode, such as name, icon, link address, etc.

Specifically, the server terminal of each data processing mode determines the user according to the identity identifier of the user at the server terminal which is sent by the client terminal, and thus finds processing capacity information about the user for the data processing mode, and then updates the processing capacity information about the user for the data processing mode according to the identifier of the target data processing mode selected by the user for the current data processing process and the result information about using the target data processing mode in the current data processing process.

For example, for a server terminal of a certain data processing mode, if it is determined that the user has selected the data processing mode provided by the server terminal according to the identifier of the target data processing mode selected by the user for the current data processing process, and the result of the current data processing process using the data processing mode is successful, then the processing capacity information about the user for the data processing mode provided by the server terminal may be increased or improved. For example, the use score of the user for the data processing mode is increased; and on the contrary, if it is determined that the user has not selected the data processing mode provided by the server terminal according to the identifier of the target data processing mode selected by the user for the current data processing process, or the user has selected the data processing mode provided by the server terminal but the result of the current data processing process using the data processing mode is unsuccessful, then the processing capacity information about the user for the data processing mode provided by the server terminal may be decreased. For example, the use score of the user for the data processing mode is decreased, wherein the client terminal provides for the server terminal of each data processing mode the identifier of the target data processing mode selected by the user and result information about using the target data processing mode in the current data processing process, for the server terminal to update the processing capacity information about the user for the data processing mode, which is beneficial to providing more accurate processing capacity information in subsequent services.

In another optional embodiment, there is one server terminal as described above, that is, one server terminal manages at least one data processing mode uniformly. For example, the server terminal may manage processing capacity information about the user for each data processing mode via an information table. The at least one data processing mode comprises a data processing mode provided by the server and/or a data processing mode not provided by the server.

Optionally, a client terminal may also send, after a user has selected a target data processing mode for a current data processing process from candidate data processing modes, to the server terminal an identifier of the target data processing mode and result information about using the target data processing mode in the current data processing process, for the server terminal to update processing capacity information about the user for the at least one data processing mode. Furthermore, in order to distinguish the user, the server terminal may also send an identity identifier of the user at the server terminal to the client terminal; and the client terminal receives the identity identifier of the user at the server terminal. On this basis, in order to facilitate distinguishing the user by the server terminal, in the process whereby the client terminal sends to the server terminal the identifier of the target data processing mode and the result information about using the target data processing mode in the current data processing process, the identity identifier of the user at the server terminal may also be sent together to the server terminal for the server terminal to determine the user.

For example, for a certain data processing mode, if it is determined that the user has selected the data processing mode according to the identifier of the target data processing mode selected by the user for the current data processing process, and the result of the current data processing process using the data processing mode is successful, then the processing capacity information about the user for the data processing mode may be increased or improved. For example, the use score of the user for the data processing mode is increased; and on the contrary, if it is determined that the user has not selected the data processing mode according to the identifier of the target data processing mode selected by the user for the current data processing process, or the user has selected the data processing mode but the result of the current data processing process using the data processing mode is unsuccessful, then the processing capacity information about the user for the data processing mode may be decreased. For example, the use score of the user for the data processing mode is decreased, wherein the client terminal provides for the server terminal the identifier of the target data processing mode selected by the user and result information about using the target data processing mode in the current data processing process, for the server terminal to update the processing capacity information about the user for the data processing mode, which is beneficial to providing more accurate processing capacity information in subsequent services.

Fig. 2 is a schematic flow chart of a data processing method provided by another embodiment of the present application. As shown in Fig. 2, the method comprises:
201, receiving, by a server terminal, a feature identifier of a user in a current data processing process sent by a client terminal;
202, acquiring, by the server terminal, processing capacity information about the user for at least one data processing mode according to the feature identifier of the user; and
203, sending, by the server terminal, to the client terminal the processing capacity information about the user for the at least one data processing mode for the client terminal to determine candidate data processing modes to be displayed to the user and a display mode.

This embodiment provides a data processing method, which can be implemented at a server terminal. The server terminal has the function of providing for a client terminal processing capacity information about a user for a data processing mode. This embodiment does not limit the data processing mode. For example, the data processing mode may be various data processing modes such as a data processing mode used for a payment scenario, a data processing mode used for a data conversion scenario, a data processing mode used for a query scenario, etc. Taking the data processing mode used for a payment scenario as an example, the data processing mode refers to a payment mode for accomplishing a payment logic. For example, it can be various payment modes such as a credit card, a bank card, Yu'E Bao, etc.

Specifically, when the client terminal needs to use a data processing mode to execute a corresponding service, the feature identifier of the user may be acquired, and the feature identifier of the user is sent to the server terminal. The server terminal receives the feature identifier of the user in the current data processing process which is sent by the client terminal, and acquires processing capacity information about the user for at least one data processing mode according to the feature identifier of the user; and the processing capacity information about the user for the at least one data processing mode is provided for the client terminal, for the client terminal to determine candidate data processing modes to be displayed to the user and a display mode according to the processing capacity information.

In the process of conducting a service, information related to the user may generally be required to be provided, such as mobile phone number, mailbox address, ID number, name, IMEI, IMSI, IP address, MAC address, etc. The client terminal may acquire one or more of mobile phone number, mailbox address, ID number, name, IMEI, IMSI, IP address, MAC address, etc. as the feature identifier described above to send the same to the server terminal. That is, the feature identifier described above may be, but is not limited to, one or more pieces of the following information: mobile phone number, mailbox address, ID number, name, IMEI, IMSI, IP address, MAC address, etc.

In one optional embodiment, the server terminal may obtain an identity identifier of the user at the server terminal according to the feature identifier of the user. For example, the identity identifier of the user at the server terminal may be a storage ID which conforms to a storage logic of the server terminal. Then, the server terminal matches in a capacity information database according to the identity identifier of the user at the server terminal, so as to obtain the processing capacity information about the user for the at least one data processing mode.

Optionally, with regard to the same user, the identity identifier thereof at the server terminal is unique. However, one user may possibly have a plurality of feature identifiers. For example, a mobile phone number is one feature identifier of a user, while the ID number is one feature identifier of the user, etc. In order to facilitate implementation and management, the server terminal may independently store a correlation between the identity identifier of the user at the server terminal and each feature identifier of the user. For example, a correlation between the identity identifier of the user at the server terminal and a mobile phone number of the user is stored in a relational data table, while a correlation between the identity identifier of the user at the server terminal and the ID number of the user is stored in another relational data table, etc. On this basis, the process of obtaining, by the server terminal, an identity identifier of the user at the server terminal according to the feature identifier of the user comprises: selecting a feature identifier with the highest priority and having a value being not null according to the priorities of the feature identifiers of the user, and querying a relational data table corresponding to the feature identifier with the highest priority and having a value being not null according to the feature identifier with the highest priority and having a value being not null, so as to obtain an identifier corresponding to the feature identifier with the highest priority as the identity identifier of the user at the server terminal. The implementation of such a mode is relatively simple, and the time consumed for acquiring the identity identifier of the user at the server terminal is relatively little, which may not bring a user a feeling of delay, and the user experience is relatively good.

A capacity information database stores a mapping relationship between an identity identifier of the user at the server terminal and processing capacity information about the user for the at least one data processing mode.

For example, the server terminal may collect behavioral data of the user using the at least one data processing mode in advance, and obtain a mapping relationship between an identity identifier of the user at the server terminal and the processing capacity information about the user for at least one data processing mode according to the collected behavioral data, and store the mapping relationship in the capacity information database. Specifically, the feature identifier of the user is acquired from the behavioral data, statistics are conducted on the behavioral data so as to obtain the processing capacity information about the user for the data processing mode, the identity identifier of the user at the server terminal is configured, and then a mapping relationship between the identity identifier of the user at the server terminal and the processing capacity information about the user for the data processing mode is formed, and the mapping relationship is stored in the capacity information database; in addition, a mapping relationship between the identity identifier of the user at the server terminal and the feature identifier of the user is generated and stored. Optionally, a feature variable of the user using the data processing mode in the behavioral data, such as the time of successful payment by using the data processing mode recently, the number of successful payments by using the data processing mode in the last three months, etc. is used to represent the processing capacity information about the user for the data processing mode.

It is worth noting that one user may possibly have a plurality of feature identifiers. For example, a mobile phone number is one feature identifier of a user, while the ID number is one feature identifier of the user, etc. In order to facilitate implementation and management, the server terminal may independently store a correlation between the identity identifier of the user at the server terminal and each feature identifier of the user. For example, a correlation between the identity identifier of the user at the server terminal and a mobile phone number of the user is stored in a relational data table, while a correlation between the identity identifier of the user at the server terminal and the ID number of the user is stored in another relational data table, etc.

Furthermore, in the process described above, for the same data processing mode, the server terminal may collect whole network data, i.e. behavioral data of the user using the data processing mode on all the Internet websites, which may effectively solve the problem that the processing capacity information about the user for a data processing mode cannot be assessed due to a relative lack of behavioral data of the user using the data processing mode on a single website, and improve the precision and accuracy of the obtained processing capacity information about the user for the data processing mode. In addition, from the perspective of the client terminal, since various server terminals all collect behavioral data of the user using corresponding data processing modes on all the Internet websites, with regard to the client terminal, it is actually equivalent to recommending candidate data processing modes and a display form to the user based on the behavioral data of the user on the whole network websites, which is beneficial to improving the precision and accuracy of recommendation results.

For example, the client terminal described above is specifically a website, assuming that the user needs to perform data processing on a first website, at this moment, the first website may send to a second server terminal the feature identifier of the user in the current data processing process, wherein the second server terminal may be a server terminal different from a first server terminal corresponding to the first website; the second server terminal acquires processing capacity information about the user for at least one data processing mode according to the feature identifier of the user, and returns the acquired processing capacity information about the user for the at least one data processing mode to the first website; and the first website determines candidate data processing modes to be displayed to the user and a display mode according to the processing capacity information about the user for the at least one data processing mode which is returned by the second server terminal, and displays the candidate data processing modes to the user according to the display mode for the user to select a target data processing mode for the current data processing from a display page of the first website.

It is worth noting that the above-mentioned at least one data processing mode returned by the second server terminal to the first website comprises: a data processing mode used by the user for data processing on the first website, which also comprises a data processing mode used by the user for data processing on a website (such as a second website, a third website) other than the first website.

Wherein a mode for the second server terminal to collect information about the at least one data processing mode comprises: acquiring information about a data processing mode used by the user for data processing on a corresponding website via a server of the first website and servers corresponding to other websites different from the first website. Or, the first website or other websites different from the first website may also send to the second server terminal the information about a data processing mode used for executing data processing after the data processing has been successfully executed for the second server to collect information about the at least one data processing mode.

It is worth mentioning that the data processing method of the present application may specifically applied for recommending a payment mode. The data processing mode is a payment mode, and the processing capacity of the user for a data processing mode is specifically a score value calculated according to the familiarity and acceptance of the user for the payment mode in part or the whole network, and generally, the higher the familiarity and acceptance of the user is, the better the processing capacity is, and correspondingly, the higher the success rate (payment success rate) of data processing is. Taking the client terminal being an APP of a certain website A as an example, when the user needs to pay in the website A (a first website), the website A sends a request to a server terminal B (a second server terminal), the request carrying the feature identifier of the user, so as to acquire processing capacity information about the user for a data processing mode, and in this example, it is payment capacity information about the user for a payment mode, and thus the website A determines payment modes to be displayed to the user according to the payment capacity information. In the prior art, the payment modes displayed in the website A are recommended according to historical records of use in the website A. If the latest use record of the user in the website A is using a payment mode P1 one year ago, and there is no other historical record on the website A since then, while the user uses a payment mode P2 more frequently in other websites recently, then, the result of using the existing recommendation mode is to recommend the payment mode P1 in the website A. In the present application, use conditions of the user in other websites may also be taken into consideration. When the user is to pay in the website A, the feature identifier of the user is sent to the server terminal B, and the server terminal B may return processing capacity information about the user for at least one payment mode according to data of multiple websites or the whole network, and then the website A determines candidate data processing modes to be displayed to the user and a display mode according to the received information, and at this moment, the displayed recommended payment mode may preferentially be the payment mode P2. In this way, by means of whole network data, a more accurate payment mode may be recommended to the user.

In one optional embodiment, acquiring, by the server terminal, processing capacity information about the user for at least one data processing mode according to the feature identifier of the user comprises: acquiring, by the server terminal, processing capacity information about the user for at least one data processing mode maintained locally according to the feature identifier of the user, the at least one data processing mode comprising a data processing mode provided by the server terminal and/or a data processing mode not provided by the server terminal.

That is to say, in an application scenario, the server terminal may only provide for the user processing capacity information about the user for the data processing mode provided by the server terminal. For example, taking the data processing mode being a payment mode as an example, the Alipay™ server only manages one processing mode of Alipay™, and may not manage other payment modes other than Alipay™ such as WeChat Pay, Internet banking payment, etc.

In another application scenario, the server terminal locally maintains a plurality of data processing modes, comprising a data processing mode provided by the server terminal and a data processing mode which is not provided by the server terminal, and the server terminal may provide for the user processing capacity information about the user for various locally maintained data processing modes. For example, taking the data processing mode being a payment mode as an example, the Alipay™ server may simultaneously manage a plurality of payment modes such as Alipay™, Internet banking, credit card, WeChat Pay, etc.

In yet another application scenario, the server terminal does not provide a data processing mode but only has a function of maintaining and managing a data processing mode, then the server terminal locally maintains a data processing mode which is not provided by the server terminal, and may provide for the user processing capacity information about the user for the locally maintained data processing mode. For example, taking the data processing mode being a payment mode as an example, a plurality of payment modes such as Alipay™, Internet banking, credit card, WeChat Pay, etc. are managed by a dedicated server at the same time, while the server *per se* does not provide any payment mode.

In one optional embodiment, the server terminal may also send to the client terminal the identity identifier of the user at the server terminal, so as to update processing capacity information about the user for at least one data processing mode based on the identity identifier.

Specifically, the client terminal may send, after the user has selected a target data processing mode for the current data processing process from the candidate data processing modes, to the server terminal an identifier of the target data processing mode selected by the user and result information about using the target data processing mode in the current data processing process together with the identity identifier of the user at the server terminal. The server terminal receives the identity identifier of the user at the server terminal sent by the client terminal, an identifier of the target data processing mode selected by the client terminal for the current data processing process from the candidate data processing modes and result information about using the target data processing mode in the current data processing process; and the processing capacity information about the user for the at least one data processing mode is updated according to the identity identifier of the user at the server terminal, the identifier of the target data processing mode and the result information about using the target data processing mode in the current data processing process. The identifier of the target data processing mode may be any information that can identify the target data processing mode, such as name, icon, link address, etc.

Specifically, the server terminal determines the user according to the identity identifier of the user at the server terminal which is sent by the client terminal, and thus finds processing capacity information about the user for the at least one data processing mode, and then updates the processing capacity information about the user for the data processing mode according to the identifier of the target data processing mode selected by the client terminal for the current data processing process and the result information about using the target data processing mode in the current data processing process.

For example, for a data processing mode, if it is determined that the data processing mode is selected for the current data processing process according to the identifier of the target data processing mode, and the result of the current data processing process using the data processing mode is successful, then the processing capacity information about the user for the data processing mode may be increased or improved. For example, the use score of the user for the data processing mode is increased; and on the contrary, if it is determined that the user has not selected the data processing mode according to the identifier of the target data processing mode, or the user has selected the data processing mode but the result of the current data processing process using the data processing mode is unsuccessful, then the processing capacity information about the user for the data processing mode may be decreased. For example, the use score of the user for the data processing mode is decreased, wherein the client terminal updates the processing capacity information about the user for the data processing mode according to the identifier of the target data processing mode and result information about using the target data processing mode in the current data processing process, which is beneficial to providing more accurate processing capacity information in subsequent services.

In this embodiment, the processing capacity information about the user for a data processing mode described above may embody the possibility that the user uses the data processing mode in the current data processing process to some extent. In a specific implementation, a use score of the user for a data processing mode may be used to represent the processing capacity information about the user for the data processing mode, but it is not limited to this. A higher use score of the user for a data processing mode means a higher possibility that the user selects to use the data processing mode in the current data processing process.

It can be seen that providing, by the server terminal in cooperation with the client terminal, for the client terminal processing capacity information about the user using a data processing mode, thereby enabling the client terminal to determine candidate data processing modes to be displayed to the user and a display mode according to processing capacity information about the user for at least one data processing mode may select a data processing mode which may possibly be used by the user in the current data processing process from the at least one data processing mode, which is beneficial to screening out those data processing modes with lower possibilities, is beneficial to decreasing the number of pieces of information about the data processing modes to be recommended or displayed to the user, is able to preferentially display information about a data processing mode with a higher possibility of being used by the user by displaying the candidate data processing modes according to the display mode, and is beneficial to improving the efficiency that the user selects a target data processing mode from the candidate data processing modes, thereby improving the execution efficiency of a service.

In order to facilitate those skilled in the art in more clearly understanding the technical solution of the present application, description will be made hereinbelow in conjunction with a specific application scenario. In the following embodiment, a payment service may be taken as an example, and the data processing mode described above is specifically a payment mode which accomplishes a payment flow. For example, it can be a payment mode of a credit card, bank card, Alipay™, etc. Then the flow of the payment mode processing method is as follows:
a user enters a merchant website or an APP provided by a merchant for a mobile terminal, picks and purchases a required commodity or data processing mode, and enters a payment page after submitting an order. The merchant may be various electronic merchants such as yihaodian, JD, Tmall, etc.

In the process above, the merchant website or APP may acquire a feature identifier of the user in the payment service process, such as one or more of mobile phone number, mailbox, ID number, name, IMEI of a mobile phone, IMSI of a mobile phone SIM card, IP address and MAC address, etc. of the user, and send the feature identifier to server terminals of various payment modes. It is worth noting that in the process of user registration, generally the user is requested to provide information such as mobile phone number, mailbox, ID number, name, etc., and a correlation between information such as the mobile phone number, mailbox, ID number, name, etc. and a user account may be formed, and therefore the merchant website or APP may acquire information such as the mobile phone number, mailbox, ID number, name, etc. of the user by searching for registration information according to an account input when the user logs in. With regard to the information such as the IMEI of a mobile phone, the IMSI of a mobile phone SIM card, the IP address and MAC address, etc., the merchant website or APP may directly acquire the same by reading a configuration file of the mobile phone.

After having received the feature identifiers of the user which are sent by the merchant website or APP, the server terminal of a payment mode performs priority ranking on the feature identifiers and obtains a feature identifier with the highest priority, searches a relational data table corresponding to the feature identifier with the highest priority, and acquires an identity identifier of the user A at the server terminal of the payment mode corresponding to the feature identifier with the highest priority.

The server terminal of the payment mode queries a capacity information database according to the identity identifier of the user A at the server terminal, so as to acquire a use capacity score of the user A for the payment mode, wherein the use capacity score of the user for the payment mode has been calculated off-line in advance and stored in the database, and
the server terminal of the payment mode may collect behavioral data of payments performed by the user on all the Internet websites, and conduct statistics on the use capacity score of the user for the payment mode according to behavioral data of the whole network. For example, assuming that the user is paying on Taobao currently, then in addition to behavioral data of payment performed by the user on Taobao, the payment server terminal may also collect behavioral data of payments performed by the user on various other electronic commerce websites such as JD and yihaodian, etc., and recommend candidate payment modes to the user based on the behavioral data of payments of the whole network of the user.

The server terminal of the payment mode sends to the merchant website or APP the identity identifier of the user A at the server terminal of the payment mode. For example, it can be a string of alpha-numerical identifier ID: X, together with the use capacity score of the user for the payment mode.

After having received the use capacity scores of the user for various payment modes, the merchant website or APP determines the contents and display mode of a cashier desk page according to the use capacity scores of the user for various payment modes, wherein the contents of the cashier desk page are actually information about payment modes to be displayed to the user. For example, the contents may be an icon, name, type, link address, etc. of a payment mode. The display mode comprises an arrangement order of displaying payment modes on the cashier desk page, and whether to make a distinct mark or text prompt, etc. for some payment modes.

When the user determines to pay, the merchant website or APP displays information about a corresponding payment mode to the user on the cashier desk page according to the display mode described above. The user selects a payment mode required by a current payment operation for payment according to the information about the payment mode displayed on the cashier desk page of the merchant website or APP.

After the user finishes payment, the merchant website or APP transmits back to the server terminal of the payment mode an identifier of a payment mode selected to be used by the user and a payment result together with the identity identifier ID: X of the user at the server terminal of the payment mode. The payment result comprises whether the user has finally paid successfully. The server terminal of the payment mode updates the use capacity scores of the user for the payment modes according to this information so as to provide more accurate use capacity scores for the user in the next payment process.

It can be seen from above that before a payment operation, the merchant website or APP provides the feature identifier of the user for the server terminal of related payment modes; the server terminal of the payment mode obtains use capacity scores of the user for payment modes according to the feature identifier of the user and returns the same to the merchant website or APP; and the merchant website or APP determines payment modes to be displayed to the user and a payment method according to the use capacity scores of the user for various payment modes. By data interaction with the server terminal of the payment mode, the merchant website or APP may acquire more accurate and quantized use capacity scores, so that it can display a payment mode to the user according to the use capacity scores of the user for different payment modes, and the displayed payment modes have more targeted guidance and prompt, which may therefore improve the probability that the user selects a payment mode successfully, simplify the operation of the user selecting a payment mode, and improve the payment efficiency.

It needs to be noted that, for brevity, each of the foregoing method embodiments is represented as a combination of a series of actions. However, those skilled in the art should be aware that the present application is not limited to the order of the described actions because according to the present application, some steps may adopt other orders or may be performed at the same time. In addition, those skilled in the art should also understand that the embodiments described in the description are all preferred embodiments and the actions and modules involved are not necessarily required for the present application.

In the embodiments described above, the descriptions for the various embodiments have different stresses, and, for what is not described in detail in one embodiment, reference may be made to related descriptions in other embodiments.

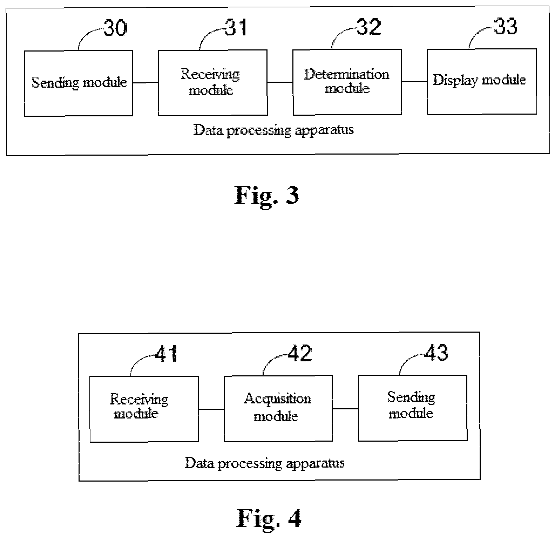

Fig. 3 is a schematic structural diagram of a data processing apparatus provided by an embodiment of the present application. The data processing apparatus may be implemented at a client terminal. The client terminal refers to a party which executes a particular operation so as to implement a certain service, and the client terminal is not limited in this embodiment. For example, the client terminal may specifically be a client terminal which implements various services such as a payment service, a download services, a search service, etc.

It is worth noting that all the client terminals in the present application need to rely on data processing modes provided by the server terminal to implement corresponding services. Depending on different service types implemented by the client terminal, the required data processing modes may also be different. For example, with regard to a payment type service, the required data processing mode may be one with a payment function. For instance, it may be various payment modes such as a credit card, a bank card, Yu'E Bao, etc.

As shown in Fig. 3, the apparatus comprises: a sending module 30, a receiving module 31, a determination module 32 and a display module 33.

The sending module 30 is configured to send to a server terminal a feature identifier of a user in a current data processing process;
the receiving module 31 is configured to receive processing capacity information about the user for at least one data processing mode returned by the server terminal according to the feature identifier of the user;
the determination module 32 is configured to determine candidate data processing modes to be displayed to the user and a display mode according to the processing capacity information about the user for the at least one data processing mode which is received by the receiving module 31; and
the display module 33 is configured to display the candidate data processing modes determined by the determination module 32 to the user according to the display mode determined by the determination module 32 for the user to select a target data processing mode for the current data processing process from the candidate data processing modes.

In one optional embodiment, the sending module 30 is specifically configured to:
collect the feature identifier of the user in the current data processing process; and
send the feature identifier of the user respectively to a server terminal of each data processing mode in the at least one data processing mode.

The receiving module 31 is specifically configured to: receive processing capacity information about the user for each data processing mode returned by the server terminal of each data processing mode according to the feature identifier of the user.

In one optional embodiment, the receiving module 31 is further configured to: receive an identity identifier of the user at a server terminal sent by the server terminal of each data processing mode.

The sending module 30 is further configured to: after the user selects the target data processing mode for the current data processing process from the candidate data processing modes, send to the server terminal of each data processing mode the identity identifier of the user at the server terminal sent by the server terminal of each data processing mode, an identifier of the target data processing mode and result information about using the target data processing mode in the current data processing process, for the server terminal of each data processing mode to update the processing capacity information about the user for each data processing mode.

In one optional embodiment, there is one server terminal as described above.

Optionally, the sending module 30 is further configured to: send, after a user has selected a target data processing mode for a current data processing process from candidate data processing modes, to the server terminal an identifier of the target data processing mode and result information about using the target data processing mode in the current data processing process, for the server terminal to update processing capacity information about the user for the at least one data processing mode.

Furthermore, optionally, the receiving module 31 is further configured to: receive an identity identifier of the user at a server terminal sent by the server terminal. The sending module 30 is further configured to: in the process of sending to the server terminal the identifier of the target data processing mode and the result information about using the target data processing mode in the current data processing process, send to the server terminal the identity identifier of the user at the server terminal.

In the process of conducting a service, information related to the user may generally be required to be provided, such as mobile phone number, mailbox address, ID number, name, IMEI, IMSI, IP address, MAC address, etc. The feature identifier described above may be, but is not limited to, one or more pieces of the following information: mobile phone number, mailbox address, ID number, name, IMEI, IMSI, IP address, MAC address, etc.

The processing capacity information about the user for a data processing mode described above may embody the possibility that the user uses the data processing mode in the current data processing process to some extent. In a specific implementation, a use score of the user for a data processing mode may be used to represent the processing capacity information about the user for the data processing mode, but it is not limited to this. A higher use score of the user for a data processing mode means a higher possibility that the user selects to use the data processing mode in the current data processing process.

In this embodiment, in order to facilitate description, the data processing modes needing to be displayed to the user are referred to as candidate data processing modes, and the data processing mode finally selected by the user for the current data processing process is referred to as a target data processing mode. The target data processing mode is one or more of the candidate data processing modes; and the candidate data processing modes are one or more of the at least one data processing mode described above.

For example, when it is determined according to the processing capacity information about the user for the at least one data processing mode that the user may possibly use each data processing mode in the at least one data processing mode, the determination module 32 takes each data processing mode in the at least one data processing mode as one candidate data processing mode; and when it is determined according to the processing capacity information about the user for the at least one data processing mode that the user may possibly use part of data processing modes in the at least one data processing mode, the determination module 32 takes that part of data processing modes as candidate data processing modes.

In this embodiment, the display mode determined by the determination module 32 mainly comprises an arrangement order of the candidate data processing modes, and whether to make a distinct mark or text prompt, etc. for part of candidate data processing modes. The display mode of the candidate data processing modes embodies the possibility that the user uses the candidate data processing modes in the current data processing process to some extent. For example, the arrangement order when the candidate data processing modes are displayed may be a descending order of possibilities that the user uses the candidate data processing modes, and with regard to a candidate data processing mode of which the possibility of being used by the user is greater than a specified threshold, a distinct mark and/or text prompt, etc. may be made; and with regard to a candidate data processing mode of which the possibility of being used by the user is smaller than or equal to a specified threshold, it may be hidden.

It is worth noting that displaying candidate data processing modes to the user by the display module 33 mainly refers to displaying information about the candidate processing modes to the user, such as identifiers (ID), names, link addresses, etc. of the candidate data processing modes.

Determining, by the data processing apparatus provided in this embodiment, candidate data processing modes to be displayed to the user according to processing capacity information about the user for at least one data processing mode may select a data processing mode which may possibly be used by the user in the current data processing process from the at least one data processing mode, which is beneficial to screening out those data processing modes with lower possibilities, is beneficial to decreasing the number of pieces of information about the data processing modes to be recommended or displayed to the user, and is beneficial to improving the efficiency that the user selects a target data processing mode therefrom; in addition, determining a display mode for displaying the candidate data processing modes according to the processing capacity information about the user for the at least one data processing mode and displaying the candidate data processing modes to the user according to the display mode may preferentially display information about a data processing mode of which the possibility of being used by the user is higher, which is beneficial to further improving the efficiency that the user selects a target data processing mode from the candidate data processing modes, thereby improving the execution efficiency of a service.

Fig. 4 is a schematic structural diagram of a data processing apparatus provided by another embodiment of the present application. The data processing apparatus may be implemented at a server terminal. The server terminal has the function of providing for a client terminal processing capacity information about a user for a data processing mode. This embodiment does not limit the data processing mode. For example, the data processing mode may specifically be a data processing mode used for a payment scenario, a data processing mode used for a data conversion scenario, a data processing mode used for a query scenario, etc. Taking the data processing mode used for a payment scenario as an example, the data processing mode refers to a payment mode having a payment function. For example, it can be various payment modes such as a credit card, a bank card, Yu'E Bao, etc.

As shown in Fig. 4, the apparatus comprises: a receiving module 41, an acquisition module 42 and a sending module 43.

The receiving module 41 is configured to receive a feature identifier of a user in a current data processing process sent by a client terminal.

The acquisition module 42 is configured to acquire processing capacity information about the user for at least one data processing mode according to the feature identifier of the user which is received by the receiving module 41.

The sending module 43 is configured to send the client terminal the processing capacity information about the user for the at least one data processing mode which is acquired by the acquisition module 42 for the client terminal to determine candidate data processing modes to be displayed to the user and a display mode.

In one optional embodiment, the acquisition module 42 is specifically configured to:
obtain an identity identifier of the user at the server terminal according to the feature identifier of the user; and
match in a capacity information database according to the identity identifier of the user at the server terminal, so as to obtain processing capacity information about the user for the at least one data processing mode.

In one optional embodiment, when obtaining an identity identifier of the user at the server terminal according to the feature identifier of the user, the acquisition module 42 is specifically configured to:
select a feature identifier with the highest priority and having a value being not null according to the priorities of the feature identifiers of the user, and searching in a relational data table corresponding to the feature identifier with the highest priority and having a value being not null, so as to obtain an identifier corresponding to the feature identifier with the highest priority and having a value being not null as the identity identifier of the user at the server terminal.

In one optional embodiment, the acquisition module 42 is specifically configured to:
acquire processing capacity information about the user for at least one data processing mode maintained locally according to the feature identifier of the user, the at least one data processing mode comprising a data processing mode provided by the server terminal and/or a data processing mode not provided by the server terminal.

Furthermore, the data processing apparatus further comprises: an update module.

The sending module 43 is further configured to: send the identity identifier of the user at the server terminal to the client terminal. Correspondingly, the receiving module 41 is further configured to: receive the identity identifier of the user at the server terminal sent by the client terminal, an identifier of the target data processing mode selected by the client terminal for the current data processing process from the candidate data processing modes and result information about using the target data processing mode in the current data processing process.

Based on above, the update module is configured to update the processing capacity information about the user for the at least one data processing mode is updated according to the identity identifier of the user at the server terminal, the identifier of the target data processing mode and the result information about using the target data processing mode in the current data processing process which are received by the receiving module 41.

In the process of conducting a service, information related to the user may generally be required to be provided, such as mobile phone number, mailbox address, ID number, name, IMEI, IMSI, IP address, MAC address, etc. The client terminal may acquire one or more of mobile phone number, mailbox address, ID number, name, IMEI, IMSI, IP address, MAC address, etc. as the feature identifier described above to send the same to the server terminal. That is, the feature identifier described above may be, but is not limited to, one or more pieces of the following information: mobile phone number, mailbox address, ID number, name, IMEI, IMSI, IP address, MAC address, etc.

In this embodiment, the processing capacity information about the user for a data processing mode acquired by the acquisition module 42 may embody the possibility that the user uses the data processing mode in the current data processing process to some extent. In a specific implementation, a use score of the user for a data processing mode may be used to represent the processing capacity information about the user for the data processing mode, but it is not limited to this. A higher use score of the user for a data processing mode means a higher possibility that the user selects to use the data processing mode in the current data processing process.

It can be seen that by providing, by the data processing apparatus provided by this embodiment, for the client terminal processing capacity information about the user using a data processing mode, thereby enabling the client terminal to determine candidate data processing modes to be displayed to the user and a display mode according to processing capacity information about the user for at least one data processing mode may select a data processing mode which may possibly be used by the user in the current data processing process from the at least one data processing mode, which is beneficial to screening out those data processing modes with lower possibilities, is beneficial to decreasing the number of pieces of information about the data processing modes to be recommended or displayed to the user, is able to preferentially display information about a data processing mode with a higher possibility of being used by the user by displaying the candidate data processing modes according to the display mode, and is beneficial to improving the efficiency that the user selects a target data processing mode from the candidate data processing modes, thereby improving the execution efficiency of a service.

It may be clearly understood by those skilled in the art that, for the purpose of convenient and brief description, the detailed working processes of the system, apparatus, and unit described above may refer to the corresponding processes in the foregoing method embodiments, and the details will not be described herein again.

In the several embodiments provided in the present application, it should be understood that, the disclosed system, apparatus and method may be implemented in other manners. For example, the apparatus embodiments described above are merely exemplary. For example, the division of the units is merely logical function division and there may be other divisions in actual implementation. For example, a plurality of units or components may be combined or may be integrated into another system, or some features may be ignored or not executed. From another point of view, the displayed or discussed mutual coupling or direct coupling or communication connection may be indirect coupling or communication connection of apparatuses or units through some interfaces, and may be in electrical, mechanical or other forms.

The units described as separate parts may be or may not be physically separate, and parts displayed as units may be or may not be physical units, that is, may be located in one position or may also be distributed on a plurality of network units. Some or all of the units may be selected upon actual demands to implement the objective of the solution of the embodiments.

In addition, various functional units in each embodiment of the present application may be integrated into one processing unit, or each of the units may exist alone physically, or two or more units may also be integrated into one unit. The integrated unit described above may be implemented in form of hardware, or may also be implemented in form of hardware plus a software functional unit.

The integrated unit implemented in form of a software functional unit described above may be stored in a computer readable storage medium. The software functional unit is stored in a storage medium and includes several instructions for instructing a computer device (which may be a personal computer, a server, or a network device) or a processor to perform some of the steps of the methods described in various embodiments of the present application. The aforementioned storage medium comprises: various mediums that can store program codes, such as a USB flash drive, a removable hard disk, a read-only memory (Read-Only Memory, ROM), a random access memory (Random Access Memory, RAM), a magnetic disk, or an optical disc, etc.

Finally, it should be noted that the foregoing embodiments are merely intended for describing the technical solutions of the present application rather than limiting the present application; and although detailed descriptions are given to the present invention with reference to the foregoing embodiments, those of ordinary skills in the art should understand: they can still make modifications to the technical solutions recited in the aforementioned various embodiments, or make equivalent replacements to some of the technical features thereof; however, these modifications or replacements do not make the essence of the corresponding technical solutions depart from the spirit and scope of the technical solutions of the various embodiments of the present application.

## Claims

1. A data processing method, **characterized by** comprising:
sending, by a client terminal, to a server terminal a feature identifier of a user in a current data processing process;
receiving, by the client terminal, processing capacity information about the user for at least one data processing mode returned by the server terminal according to the feature identifier of the user;
determining, by the client terminal, candidate data processing modes to be displayed to the user and a display mode according to the processing capacity information about the user for at least one data processing mode; and
displaying, by the client terminal, the candidate data processing modes to the user according to the display mode for the user to select a target data processing mode for the current data processing process from the candidate data processing modes.

2. The method according to claim 1, **characterized in that** the sending, by a client terminal, to a server terminal a feature identifier of a user in a current data processing process comprises:
collecting, by the client terminal, the feature identifier of the user in the current data processing process; and
sending, by the client terminal, the feature identifier of the user respectively to a server terminal of each data processing mode in the at least one data processing mode; and
the receiving, by the client terminal, processing capacity information about the user for at least one data processing mode returned by the server terminal according to the feature identifier of the user comprises:
receiving, by the client terminal, processing capacity information about the user for the each data processing mode returned by the server terminal of the each data processing mode according to the feature identifier of the user.

3. The method according to claim 2, **characterized by** further comprising:
receiving, by the client terminal, an identity identifier of the user at a server terminal sent by the server terminal of the each data processing mode; and
after the user selects the target data processing mode for the current data processing process from the candidate data processing modes, sending, by the client terminal, to the server terminal of the each data processing mode the identity identifier of the user at the server terminal sent by the server terminal of the each data processing mode, an identifier of the target data processing mode and result information about using the target data processing mode in the current data processing process, for the server terminal of the each data processing mode to update the processing capacity information about the user for the each data processing mode.

4. The method according to claim 1, **characterized in that** after the displaying, by the client terminal, the candidate data processing modes to the user according to the display mode, the method further comprises:
sending, by the client terminal, to the server terminal an identifier of the target data processing mode selected by the user and result information about using the target data processing mode in the current data processing process, for the server terminal to update the processing capacity information about the user for the at least one data processing mode.

5. A data processing method for a data processing mode, **characterized by** comprising:
receiving, by a server terminal, a feature identifier of a user in a current data processing process sent by a client terminal;
acquiring, by the server terminal, processing capacity information about the user for at least one data processing mode according to the feature identifier of the user; and
sending, by the server terminal, to the client terminal the processing capacity information about the user for the at least one data processing mode for the client terminal to determine candidate data processing modes to be displayed to the user and a display mode.

6. The method according to claim 5, **characterized in that** the acquiring, by the server terminal, processing capacity information about the user for at least one data processing mode according to the feature identifier of the user comprises:
obtaining, by the server terminal, an identity identifier of the user at the server terminal according to the feature identifier of the user; and
matching, by the server terminal, in a capacity information database according to the identity identifier of the user at the server terminal, so as to obtain the processing capacity information about the user for the at least one data processing mode.

7. The method according to claim 6, **characterized in that** the obtaining, by the server terminal, an identity identifier of the user at the server terminal according to the feature identifier of the user comprises:
selecting a feature identifier with the highest priority and having a value being not null according to the priorities of the feature identifiers of the user, and searching in a relational data table corresponding to the feature identifier with the highest priority and having a value being not null, so as to obtain an identifier corresponding to the feature identifier with the highest priority and having a value being not null as the identity identifier of the user at the server terminal.

8. The method according to any one of claims 5-7, **characterized in that** the acquiring, by the server terminal, processing capacity information about the user for at least one data processing mode according to the feature identifier of the user comprises:
acquiring, by the server terminal, processing capacity information about the user for at least one data processing mode maintained locally according to the feature identifier of the user, the at least one data processing mode comprising a data processing mode provided by the server terminal and/or a data processing mode not provided by the server terminal.

9. The method according to claim 5 or 6, **characterized by** further comprising:
sending, by the server terminal, the identity identifier of the user at the server terminal to the client terminal;
receiving, by the server terminal, the identity identifier of the user at the server terminal sent by the client terminal, an identifier of a target data processing mode selected by the client terminal for the current data processing process from the candidate data processing modes and result information about using the target data processing mode in the current data processing process; and
updating, by the server terminal, the processing capacity information about the user for the at least one data processing mode according to the identity identifier of the user at the server terminal, the identifier of the target data processing mode and the result information about using the target data processing mode in the current data processing process.

10. A data processing apparatus, implemented at a client terminal, **characterized in that** the apparatus comprises:
a sending module, configured to send to a server terminal a feature identifier of a user in a current data processing process;
a receiving module, configured to receive processing capacity information about the user for at least one data processing mode returned by the server terminal according to the feature identifier of the user;
a determination module, configured to determine candidate data processing modes to be displayed to the user and a display mode according to the processing capacity information about the user for at least one data processing mode; and
a display module, configured to display the candidate data processing modes to the user according to the display mode for the user to select a target data processing mode for the current data processing process from the candidate data processing modes.

11. The apparatus according to claim 10, **characterized in that** the sending module is specifically configured to:
collect the feature identifier of the user in the current data processing process; and
send the feature identifier of the user respectively to a server terminal of each data processing mode in the at least one data processing mode; and
the receiving module is specifically configured to:
receive processing capacity information about the user for the each data processing mode returned by the server terminal of the each data processing mode according to the feature identifier of the user.

12. The apparatus according to claim 11, **characterized in that** the receiving module is further configured to:
receive an identity identifier of the user at a server terminal sent by the server terminal of the each data processing mode; and
the sending module is further configured to:
after the user selects the target data processing mode for the current data processing process from the candidate data processing modes, send to the server terminal of the each data processing mode the identity identifier of the user at the server terminal sent by the server terminal of the each data processing mode, an identifier of the target data processing mode and result information about using the target data processing mode in the current data processing process, for the server terminal of the each data processing mode to update the processing capacity information about the user for the each data processing mode.

13. The apparatus according to claim 11, **characterized in that**
the sending module is further configured to: send to the server terminal an identifier of the target data processing mode selected by the user and result information about using the target data processing mode in the current data processing process, for the server terminal to update the processing capacity information about the user for the at least one data processing mode.

14. A data processing apparatus, implemented at a server terminal, **characterized in that** the apparatus comprises:
a receiving module, configured to receive a feature identifier of a user in a current data processing process sent by a client terminal;
an acquisition module, configured to acquire processing capacity information about the user for at least one data processing mode according to the feature identifier of the user; and
a sending module, configured to send to the client terminal the processing capacity information about the user for the at least one data processing mode for the client terminal to determine candidate data processing modes to be displayed to the user and a display mode.

15. The apparatus according to claim 14, **characterized in that** the acquisition module is specifically configured to:
obtain an identity identifier of the user at the server terminal according to the feature identifier of the user; and
match in a capacity information database according to the identity identifier of the user at the server terminal, so as to obtain the processing capacity information about the user for the at least one data processing mode.

16. The apparatus according to claim 15, **characterized in that** the acquisition module is specifically configured to:
select a feature identifier with the highest priority and having a value being not null according to the priorities of the feature identifiers of the user, and searching in a relational data table corresponding to the feature identifier with the highest priority and having a value being not null, so as to obtain an identifier corresponding to the feature identifier with the highest priority and having a value being not null as the identity identifier of the user at the server terminal.

17. The apparatus according to any one of claims 14-16, **characterized in that** the acquisition module is specifically configured to:
acquire processing capacity information about the user for at least one data processing mode maintained locally according to the feature identifier of the user, the at least one data processing mode comprising a data processing mode provided by the server terminal and/or a data processing mode not provided by the server terminal.

18. The apparatus according to claim 14 or 15, **characterized by** further comprising: an update module;
the sending module being further configured to: send the identity identifier of the user at the server terminal to the client terminal;
the receiving module being further configured to: receive the identity identifier of the user at the server terminal sent by the client terminal, an identifier of the target data processing mode selected by the client terminal for the current data processing process from the candidate data processing modes and result information about using the target data processing mode in the current data processing process; and
the update module being configured to update the processing capacity information about the user for the at least one data processing mode according to the identity identifier of the user at the server terminal, the identifier of the target data processing mode and the result information about using the target data processing mode in the current data processing process.
